# FASCICULE DE BREVET EUROPEEN

(11) **EP 0 832 493 B1**
(45) Date de publication et mention de la délivrance du brevet: **27.04.2005**
(21) Numéro de dépôt: 97904501.0
(22) Date de dépôt: 06.02.1997
(51) Int. Cl.: H01G 2/08, H01G 2/04

(54) **CONDENSATEURS A FIXATION TRAVERSANTE**
KONDENSATOR MIT DURCHGEHENDER BEFESTIGUNG
CAPACITORS WITH THROUGH-BORES FOR FASTENING MEANS

(30) Priorité: 08.02.1996 FR 9601671
(43) Date de publication de la demande: 01.04.1998
(73) Titulaire: Jakoubovitch, Albert, 34320 Fos (FR)
(72) Inventeur: Jakoubovitch, Albert, 34320 Fos (FR)
(86) Numéro de dépôt international: PCT/FR1997/000236
(87) Numéro de publication internationale: WO 1997/029495

(56) Documents cités:
- WO-A-95/22155
- US-A- 5 214 564

## Description

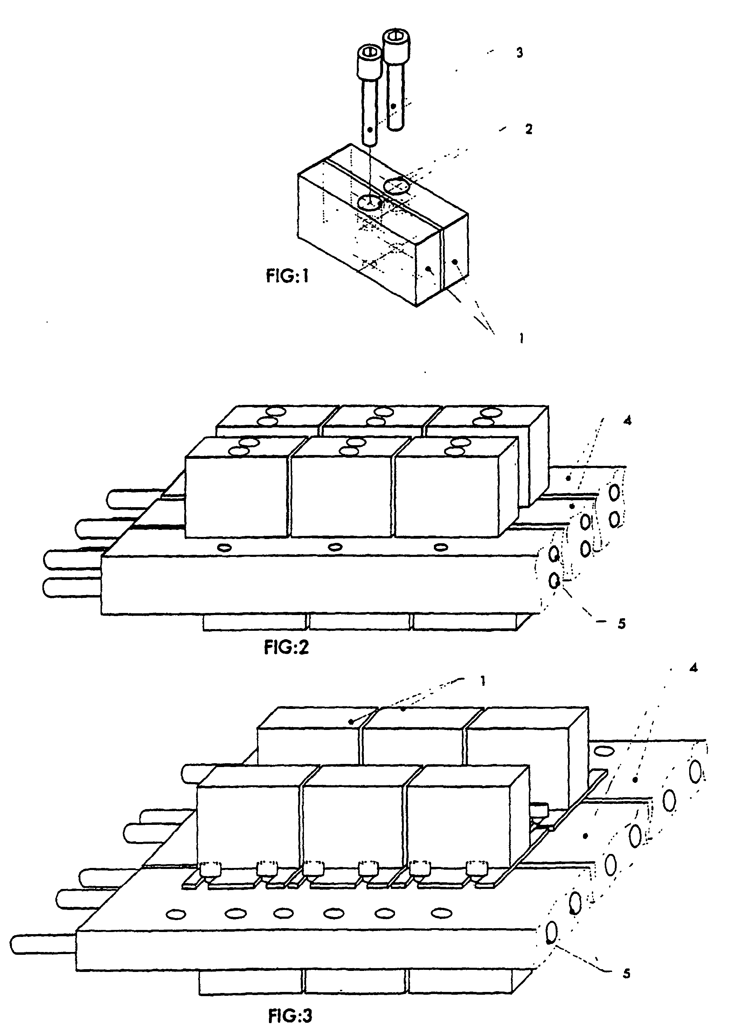

Les condensateurs de puissance refroidis par conduction et destinés aux applications du chauffage par induction sont de 2 types qui sont l'un et l'autre décrits dans le brevet FR-A-2 687 832:
- Le premier type, figure 1 du brevet précité, est destiné à être assemblé entre deux plaques métalliques refroidies par circulation d'eau (figure 3 du même brevet).
Dans le parallélogramme qui est leur forme habituelle, ce sont les faces les plus grandes qui sont refroidies. Elles sont situées de part et d'autre du condensateur.
Lorsque plusieurs condensateurs sont regroupés en parallèle entre deux plaques, le remplacement de l'un d'entre eux nécessite le démontage de la batterie toute entière.
Les moyens de refroidissement des plaques de cuivre qui servent de collecteurs conduisent à des encombrements importants lorsque plusieurs batteries sont regroupées en série ou en parallèle.
- Le second type, décrit dans le brevet FR-A-2 360 975, comporte deux ailettes reliées aux deux bornes du condensateur qui servent à la fois de conducteur électrique et de moyen de refroidissement du condensateur.

Ce type de condensateur est monté à cheval sur deux barres métalliques qui servent à la fois à refroidir les condensateurs et à collecter le courant qu'ils fournissent. Un tel dispositif est représenté sur la figure 3.

Contrairement aux condensateurs précédents, ce deuxième type de condensateur peut être monté et démonté individuellement sans avoir à démonter la batterie.

Le regroupement en série parallèle est également aisé et l'un des moyens d'y parvenir est décrit dans le brevet FR-A-2 732 156.

La présente invention est destinée à réduire l'encombrement et le poids des batteries de condensateurs de ce type.

Le condensateur objet de cette invention sera décrit en se référant aux figures 1 et 2.

Le procédé utilisé consiste à supprimer les deux ailettes de refroidissement (4 de la figure 2 du brevet FR-A-2 687 832) et à refroidir le condensateur sur chant.

La figure 1 représente un condensateur selon l'invention.

Cette figure est donnée à titre d'exemple non limitatif et simplement destinée à illustrer l'invention.

Le condensateur comporte 2 électrodes (1) métalliques massives entre lesquelles sont connectées les éléments diélectriques du condensateur.

Chacune des électrodes (1) est percée d'un trou (2) destiné à recevoir un boulon (3) qui viendra fixer le condensateur sur les barres collectrices (4) refroidies par canaux (5) parcourus par un fluide de refroidissement.

Le contact thermique entre le condensateur et la barre de refroidissement (4) s'effectue sur toute la surface du chant le plus grand ou tout au moins sur sa plus grande partie.

Ce mode de réalisation et de fixation permet la juxtaposition des condensateurs d'une batterie dans un espace beaucoup plus faible que le système décrit dans le brevet FR-A-2 732 156, grâce à la suppression des ailettes.

Le vissage direct du condensateur sur les barres de refroidissement supprime la barrière thermique que constituaient les ailettes et améliore le refroidissement du condensateur.

Le montage et le démontage du condensateur ainsi réalisé deviennent d'une extrême simplicité puisqu'il consiste à dévisser 2 boulons pour retirer ou ajouter un élément sans avoir à intervenir sur le reste de la batterie.

Il est évidemment possible de prévoir, par électrode, plusieurs trous traversants ainsi que les boulons correspondants, lorsque la dimension de celle-ci le nécessite.

Ce procédé est compatible avec le système décrit dans le brevet FR-A-2 732 156 dont il diminue considérablement l'encombrement.

## Revendications

1. Condensateur de puissance refroidi sur chant par conduction, **caractérisé en ce qu'**il comporte deux électrodes métalliques (1) massives entre lesquelles sont connectés les éléments diélectriques du condensateur et, traversées chacune par au moins un trou (2) destiné à recevoir un boulon (3) correspondant pour fixer par vissage direct le condensateur sur chant sur des barres de refroidissement collectrices de courant (4) refroidies par des canaux (5) parcourus par un fluide de refroidissement.

## Patentansprüche

1. Leistungskondensator, der durch Leitung auf der Kante gekühlt wird, **gekennzeichnet dadurch dass** er zwei massive Metallelektroden (1) enthält, zwischen denen die dielektrischen Elemente des Kondensators verbunden sind und die jede mindestens ein Loch (2) enthalten, durch das ein entsprechender Bolzen (3) geschoben wird, um durch direktes Verschrauben den Kondensator auf der Kante an den strom-sammelden Kühlleisten (4) zu befestigen, die durch Kanäle (5) gekühlt werden, durch die ein Kühlmittel fliesst.

## Claims

1. An edge conduction cooling condenser **characterised in that** it is equipped with two solid metal electrodes (1) between which the dielectric elements of the condenser are connected and which are foreseen with at least one hole (2) through which bolt (3) is passed in order to directly screw fasten the edge of the condenser to the cooling and electrical collector rods (4) and cooled with pipes (5) through which a cooling fluid passes.
